# EUROPEAN PATENT SPECIFICATION

(11) **EP 2 532 727 B1**
(45) Date of publication and mention of the grant of the patent: **29.10.2014**
(21) Application number: 12169168.7
(22) Date of filing: 23.05.2012
(51) Int. Cl.: C10G 11/20, C10G 11/18

(54) **Process for fluid catalytic cracking**
Verfahren zum Fluid-Catalytic-Cracking
Procédé de craquage catalytique fluide

(30) Priority: 10.06.2011 US 201113158138
(43) Date of publication of application: 12.12.2012
(73) Proprietor: UOP LLC, Des Plaines, IL 60017-5017 (US)
(72) Inventor: Cammy, Neal E., Des Plaines, IL Illinois 60017-5017 (US); Walker, Patrick D., Des Plaines, IL Illinois 60017-5017 (US); Lorsbach, Thomas William, Des Plaines, IL Illinois 60017-5017 (US); Helmer, Jr., Charles L., Des Plaines, IL Illinois 60017-5017 (US)
(74) Representative: Boult Wade Tennant

(56) References cited:
- US-A- 3 894 934
- US-A- 4 422 925
- US-A- 5 268 089
- US-B2- 7 312 370
- US-B2- 7 767 075

## Description

### PRIORITY CLAIM OF EARLIER NATIONAL APPLICATION

This application claims priority to U.S. Application No. 13/158,138 filed June 10, 2011.

### FIELD OF THE INVENTION

This invention generally relates to a process for fluid catalytic cracking.

### DESCRIPTION OF THE RELATED ART

Fluid catalytic cracking (may be abbreviated as "FCC") can create a variety of products from heavier hydrocarbons. Often, a feed of heavier hydrocarbons, such as a vacuum gas oil, is provided to a fluid catalytic cracking reactor. Various products may be produced, including a gasoline product and/or another product, such as at least one of propylene and ethylene.

When operating FCC units with low coke accumulation on spent catalyst, the regenerator temperature may be too low to promote proper combustion. As such, high levels of carbon monoxide and/or nitrous oxide emissions may result. In order to mitigate these emissions, many refiners reduce the stripping steam rate to allow more hydrocarbons to enter the regenerator. These hydrocarbons can combust in the regenerator and increase its temperature. However, reduction of the stripping steam flow may have undesirable consequences in the spent catalyst stripper. Typically, steam distributors have a minimum flow rate and a differential pressure in order to distribute the stripping steam evenly. Reducing steam flow can cause uneven distribution of the steam in the stripper, and may lead to failure of mechanical components and/or plugging of the steam distributor jets.

US 4422925 discloses a fluid catalytic cracking process and apparatus in which a plurality of hydrocarbon feedstocks including at least one normally gaseous paraffinic hydrocarbon feedstock and at least one normally liquid hydrocarbon feedstock are subjected to cracking reaction conditions in a common transport type reaction zone in the presence of a zeolite cracking catalyst.

US 7767075 discloses systems and methods of reducing refinery carbon dioxide emissions by increasing synthesis gas production in a fluid catalytic cracking unit having a reactor and a generator.

US 3894934 describes a combination operation utilizing a mixture of small and large pore crystalline aluminosilicates having activity and selectivity for cracking hydrocarbons and cyclization of gaseous products of cracking in a dual conversion zone operation.

US 7312370 discloses an FCC process for obtaining light olefins comprising contacting a hydrocarbon feed stream with blended catalyst comprising regenerated catalyst and coked catalyst.

### SUMMARY OF THE INVENTION

One exemplary embodiment can be a process for fluid catalytic cracking. The process can include providing a mixture of a fuel gas and at least one of steam and nitrogen to a catalyst stripping zone of a reaction zone. Usually, the fuel gas is added in an amount effective to add heat duty to a regeneration zone for a catalyst of the reaction zone.

Another exemplary embodiment may be a process for fluid catalytic cracking. The process may include providing an effective amount of a mixture of a fuel gas stream and at least one of steam and nitrogen to a spent catalyst conduit communicating spent catalyst from a reaction zone to a regeneration zone.

Yet another exemplary embodiment can be a process for fluid catalytic cracking. The process can include mixing a fuel gas and steam, providing the mixture to a catalyst stripping zone of the reaction zone, and passing the catalyst and mixture to the regeneration zone. Typically, the fuel gas is added in an amount effective to add heat duty to a regeneration zone for a catalyst of a reaction zone.

Generally, stripping steam not only displaces the hydrocarbon vapors in the voids between catalyst particles, but stripping steam may also react with the coke on the catalyst, further reducing the coke that enters the regenerator. Mixing steam with the fuel gas, which can include or consist of a recycle off-gas from an FCC unit, may enhance or replace part of the stripping steam flow rate.

The benefits provided by the embodiments herein can include increasing the recovery of heavier hydrocarbons and/or some coke by replacing heavier hydrocarbons and coke combustion with fuel gas combustion. Typically, more fuel gas within an emulsion phase enters the regenerator reducing the reaction of heavier hydrocarbons on the spent catalyst with the steam. Thus, the fuel gas may displace stripped higher value heavier hydrocarbons having a higher value than fuel gas. Other benefits may include maintaining the volume flow of stripping steam to maintain the stripping steam differential pressure in the distributors, thereby preventing plugging.

### DEFINITIONS

As used herein, the term "stream" can include various hydrocarbon molecules, such as straight-chain, branched, or cyclic alkanes, alkenes, alkadienes, and alkynes, and optionally other substances, such as gases, e.g., hydrogen, or impurities, such as heavy metals, and sulfur and nitrogen compounds. The stream can also include aromatic and nonaromatic hydrocarbons. Furthermore, a superscript "+" or "-" may be used with an abbreviated one or more hydrocarbons notation, e.g., C3⁺ or C3⁻, which is inclusive of the abbreviated one or more hydrocarbons. As an example, the abbreviation "C3⁺" means one or more hydrocarbon molecules of three carbon atoms and/or more.

As used herein, the term "zone" can refer to an area including one or more equipment items and/or one or more sub-zones. Equipment items can include one or more reactors or reactor vessels, heaters, exchangers, pipes, pumps, compressors, and controllers. Additionally, an equipment item, such as a reactor, dryer, or vessel, can further include one or more zones or sub-zones.

As used herein, the term "rich" can mean an amount of at least generally 50%, and preferably 70%, by mole, of a compound or class of compounds in a stream.

As used herein, the term "substantially" can mean an amount of at least generally 80%, preferably 90%, and optimally 99%, by mole, of a compound or class of compounds in a stream.

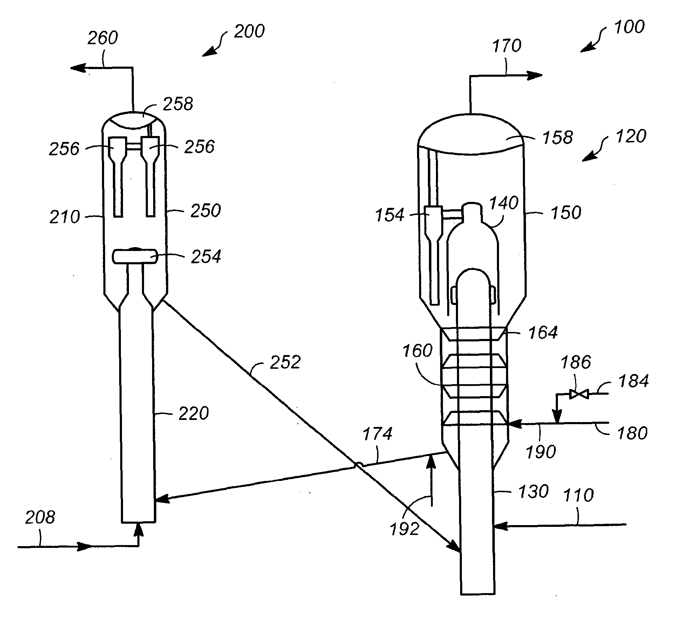

As depicted, process flow lines in the FIGURE can be referred to interchangeably as, e.g., lines, pipes, feeds, products, or streams.

### BRIEF DESCRIPTION OF THE DRAWING

The FIGURE depicts an exemplary fluid catalytic cracking apparatus.

### DETAILED DESCRIPTION

Referring to the FIGURE, a fluid catalytic cracking apparatus 100 can include a reaction zone 120 and a regeneration zone 200. The reaction zone 120 can include a riser 130 that terminates inside a casing 140, in turn inside a shell 150, and a stripping zone 160. Generally, the casing 140 can be a riser termination device, such as vortex disengaging chamber, to separate hydrocarbon from a catalyst. Any suitable catalyst may be utilized including a mixture of a plurality of catalysts including an MFI zeolite and a Y-zeolite. Exemplary catalyst mixtures are disclosed in, e.g., US 7,312,370.

Generally, the shell 150 surrounds the casing 140 and at least a portion of the riser 130. The shell 150 can also contain one or more cyclone separators 154 that can be in communication with a plenum 158. A line 170 can communicate one or more reaction products from the reaction zone 120. Exemplary reaction vessels and regenerators are disclosed in, e.g., US 7,261,807; US 7,312,370; and US 2008/0035527. However, it should be understood that any suitable reactor may be utilized with the embodiments disclosed herein.

Spent catalyst can fall from the shell 150 into the catalyst stripping zone 160. The catalyst stripping zone 160 can include one or more baffles 164. Alternatively, structured packing may be used in the stripping zone 160. Often, a stream 180 including steam and/or nitrogen is provided to the catalyst stripping zone 160.

In this exemplary embodiment, a fuel gas in any effective amount to provide the requisite heat duty to the regeneration zone 200 can be passed as a fuel gas stream 184 through a valve 186. A mixed stream 190, which may serve as at least a part of a stripping medium, including fuel gas and steam can be provided to the catalyst stripping zone 160.

Typically, coke bonded to the pores of the catalyst, which cannot be removed with the stripping medium, may be referred to as "hard coke" or "catalytic coke". Often, strippable coke may be referred to as "soft coke", "catalyst circulation coke", or "heavier hydrocarbons" and are hydrocarbon gases and/or dispersions within void spaces of and within the interstitial spaces between catalyst particles. From a heat balance perspective, any hydrocarbon burning in the regeneration zone 200 may be referred to as "coke" from a heat balance perspective. However, the embodiments disclosed herein minimize the product material burning in the regeneration zone 200.

In this exemplary embodiment, the stream 180 includes steam although nitrogen may be used instead of or in addition to the steam. In at least one exemplary embodiment, at least a portion of the mixed stream 190 including the fuel gas is carried over to a spent catalyst conduit 174, as hereinafter described.

The fuel gas can include hydrogen, one or more C1-C4 hydrocarbons, preferably hydrogen and C1-C2 hydrocarbons. In other words, the fuel gas can include at least one of hydrogen, nitrogen, carbon monoxide, methane, ethane, ethene, propane, propene, butane, and butene, preferably at least one of hydrogen, methane, ethane, and ethene. The fuel gas stream can include or consist of a recycle off-gas from an FCC unit, or be obtained from other suitable sources within a refinery or a chemical manufacturing plant. Generally, heavier hydrocarbons require more molecules due to their weight and provide insufficient volume. As a consequence, it is desirable to use lighter molecules such as hydrogen, methane, and ethane versus heavier molecules such as butane, pentane, and nitrogen. Usually, the fuel gas can be at a pressure of 340 to 1,400 kPa, and the steam can be at a pressure of no more than 620 kPa and a temperature of no more than 180°C. Typically, the volume of fuel gas can be 0 to 100% of the mixed stream 190, preferably 40 to 60%, by volume, of the mixed stream 190. Generally, the mixed stream 190 includes a weight ratio of fuel gas and steam in an amount of 1:100 to 100:1, preferably 1:2 to 2:1. The weight ratio of steam to fuel gas can be adjusted as conditions require. Generally, the fuel gas can be substantially the same composition as a lift gas utilized in an FCC unit provided at a base of a riser to lift and accelerate catalyst to a fuel injection point.

The regeneration zone 200 can include a combustor 220 and a separator 250, which collectively may form a regeneration vessel 210. Generally, a heater can provide the requisite heat of combustion inside the combustor 220. The combustor 220 can extend upward terminating in a separation or distributing device 254, which can include one or more arms. In addition, the separator 250 can substantially enclose the distributing device 254 and one or more cyclone separators 256 that separate entrained catalysts from one or more gases. The one or more cyclone separators 256 can be, in turn, in communication with a plenum 258 for receiving the one or more gases separated from the one or more cyclone separators 256. A line 260 can communicate a flue gas from the regeneration zone 200.

The spent catalyst conduit 174 can communicate the reaction zone 120 with the regeneration zone 200 for transferring spent catalyst to the combustor 220. The catalyst can rise in the combustor 220 with the coke and fuel gas undergoing combustion. Regenerated catalyst falling from the distributing device 254 can be communicated by a regenerated catalyst conduit 252 from the separator 250 of the regeneration zone 200 to the riser 130 of the reaction zone 120.

Alternatively or additionally, a fuel gas stream 192, having a similar composition as described above for the fuel gas stream 184, can be provided, preferably directly, to the spent catalyst conduit 174 in an amount effective for providing the requisite heat duty to the combustor 220. Optionally, the fuel gas stream 192 may include steam and/or nitrogen and can include at least one of nitrogen, steam, and one or more C2-C4 hydrocarbons. It should be understood that the fuel gas can be provided in the fuel gas stream 184 and/or as the fuel gas stream 192. The fuel gas stream 192 may serve as a fluidizing gas with respect to the spent catalyst present in the spent catalyst conduit 174.

The addition of fuel gas lines upstream of the stripping steam and/or lift distributor can require additional piping. The provision of check valves can prevent steam from entering the fuel gas and vice-versa. Moreover, additional equipment can include flow controllers and control valves that can adjust the ratio of steam to fuel gas. Generally, the fuel gas flow rate is monitored, as it will be considered a "feed" to the FCC apparatus 100. Optionally, a recycle stream of fuel flow gas may also be utilized.

In operation, a hydrocarbon feed 110, that may include at least one of a gas oil, a vacuum gas oil, an atmospheric gas oil, a coker gas oil, a hydrotreated gas oil, a hydrocracker unconverted oil, and an atmospheric residue, can be provided to the riser 130. The hydrocarbon feed 110 can also be contacted with regenerated catalyst provided by the regenerated catalyst conduit 252 at the base of the riser 130. Generally, the regenerated catalyst and feed mixture can be at a temperature of 500° to 650°C and a pressure of 110 to 450 kPa. The catalyst and feed can rise within the riser 130 and separate at the casing 140 using any suitable device, such as swirl arms. Typically, the catalyst falls toward the base of the shell 150 while product gases rise and separate from catalyst in the one or more cyclone separators 154. Recovered catalyst can fall to the base of the shell 150 while the product gases may enter the plenum 158 and exit as a product stream 170. The hydrocarbon products can be further processed, such as in downstream fractionation zones. An exemplary fractionation zone is disclosed in, e.g., US 3,470,084.

The regeneration zone 200 can receive spent catalyst through the spent catalyst conduit 174. Spent catalyst can enter the combustor 220 near its base where a first stream 208, typically including oxygen, is provided. Often, the first stream 208 includes air. The combustor 220 can operate at any suitable temperature, such as at least 650°C or other suitable conditions for removing coke accumulated on the catalyst particles.

Without further elaboration, it is believed that one skilled in the art can, using the preceding description, utilize the present invention to its fullest extent. The preceding preferred specific embodiments are, therefore, to be construed as merely illustrative, and not limitative of the remainder of the disclosure in any way whatsoever.

In the foregoing, all temperatures are set forth in degrees Celsius and, all parts and percentages are by weight, unless otherwise indicated.

From the foregoing description, one skilled in the art can easily ascertain the essential characteristics of this invention and, without departing from the spirit and scope thereof, can make various changes and modifications of the invention to adapt it to various usages and conditions.

## Claims

1. A process for fluid catalytic cracking, comprising:
providing a mixed stream of a fuel gas and at least one of steam and nitrogen to a catalyst stripping zone of a reaction zone wherein the fuel gas is added in an amount effective to add heat duty to a regeneration zone for a catalyst of the reaction zone, wherein the fuel gas comprises at least one of hydrogen, nitrogen, carbon monoxide, methane, ethane, ethene, propane, propene, butane, and butene.

2. The process according to claim 1, wherein the mixed stream comprises the fuel gas and steam.

3. The process according to claim 2, wherein the weight ratio of the fuel gas and steam in the mixed stream is 1:100 to 100:1.

4. The process according to claim 2, wherein the weight ratio of the fuel gas and steam in the mixed stream is 1:2 to 2:1.

5. The process according to claim 1, 2, 3, or 4, wherein the fuel gas comprises at least one of hydrogen, methane, ethane, and ethene.

6. The process according to claim 1, 2, 3, or 4, wherein the catalyst stripping zone comprises one or more baffles.

7. The process according to claim 1, 2, 3, or 4, further comprising providing the catalyst to the catalyst stripping zone, wherein the catalyst comprises an MFI zeolite.

8. The process according to claim 7, wherein the regeneration zone further comprises a regeneration vessel receiving a spent catalyst communicated by a conduit.

9. The process according to claim 8, further comprising providing a fuel gas stream to the conduit communicating the spent catalyst to the regeneration vessel.

## Patentansprüche

1. Verfahren zum Fluid-Catalytic-Cracking, umfassend:
Bereitstellen eines gemischten Stroms eines Brennstoffgases und wenigstens eines von Dampf und Stickstoff zu einer Katalysator-Strippingzone einer Reaktionszone, wobei das Brennstoffgas in einer Menge zugegeben wird, die wirksam ist, einer Regenerationszone für einen Katalysator der Reaktionszone Hitzelast hinzuzufügen, wobei das Brennstoffgas wenigstens eines von Wasserstoff, Stickstoff, Kohlenmonoxid, Methan, Ethan, Ethen, Propan, Propen, Butan und Buten umfasst.

2. Verfahren gemäß Anspruch 1, wobei der gemischte Strom das Brennstoffgas und Dampf umfasst.

3. Verfahren gemäß Anspruch 2, wobei das Gewichtverhältnis von Brennstoffgas und Dampf in dem gemischten Strom 1:100 bis 100:1 beträgt.

4. Verfahren gemäß Anspruch 2, wobei das Gewichtverhältnis von Brennstoffgas und Dampf in dem gemischten Strom 1:2 bis 2:1 beträgt.

5. Verfahren gemäß Anspruch 1, 2, 3 oder 4, wobei das Brennstoffgas wenigstens eines von Wasserstoff, Methan, Ethan und Ethen umfasst.

6. Verfahren gemäß Anspruch 1, 2, 3 oder 4, wobei die Katalysator-Strippingzone eine oder mehrere Blenden umfasst.

7. Verfahren gemäß Anspruch 1, 2, 3 oder 4, ferner umfassend Bereitstellen des Katalysators an die Katalysator-Strippingzone, wobei der Katalysator einen MFI-Zeolithen umfasst.

8. Verfahren gemäß Anspruch 7, wobei die Regenerationszone ferner ein Regenerationsgefäß umfasst, das einen durch eine Leitung zugeleiteten verbrauchten Katalysator aufnimmt.

9. Verfahren gemäß Anspruch 8, ferner umfassend Bereitstellen eines Brennstoffgasstroms an die Leitung, die den verbrauchten Katalysator dem Regenerationsgefäß zuleitet.

## Revendications

1. Procédé de craquage catalytique fluide, comprenant les étapes consistant à :
amener un courant mélangé qui est un mélange d'un gaz combustible et d'au moins de vapeur d'eau ou d'azote dans une zone de strippage de catalyseur d'une zone de réaction dans laquelle le gaz combustible est ajouté en quantité efficace pour ajouter une fonction calorifique à une zone de régénération pour un catalyseur de la zone de réaction, dans lequel le gaz combustible comprend au moins un des gaz hydrogène, azote, monoxyde de carbone, méthane, éthane, éthène, propane, propène, butane et butène.

2. Procédé selon la revendication 1, dans lequel le courant mélangé comprend le gaz combustible et de la vapeur d'eau.

3. Procédé selon la revendication 2, dans lequel le rapport pondéral entre le gaz combustible et la vapeur d'eau dans le courant mélangé est de 1:100 à 100:1.

4. Procédé selon la revendication 2, dans lequel le rapport pondéral entre le gaz combustible et la vapeur d'eau dans le courant mélangé est de 1:2 à 2:1.

5. Procédé selon la revendication 1, 2, 3 ou 4, dans lequel le gaz combustible comprend au moins un des gaz hydrogène, méthane, éthane et éthène.

6. Procédé selon la revendication 1, 2, 3 ou 4, dans lequel la zone de strippage de catalyseur comprend une ou plusieurs chicanes.

7. Procédé selon la revendication 1, 2, 3 ou 4, comprenant en outre le fait d'amener le catalyseur dans la zone de strippage de catalyseur, dans lequel le catalyseur comprend une zéolithe MFI.

8. Procédé selon la revendication 7, dans lequel la zone de régénération comprend en outre une cuve de régénération recevant un catalyseur usé transporté par une conduite.

9. Procédé selon la revendication 8, comprenant en outre le fait d'amener un courant de gaz combustible dans la conduite transportant le catalyseur usé vers la cuve de régénération.
